# FASCICULE DE BREVET EUROPEEN

(11) **EP 3 795 327 B1**
(45) Date de publication et mention de la délivrance du brevet: **15.06.2022**
(21) Numéro de dépôt: 20196291.7
(22) Date de dépôt: 15.09.2020
(51) Int. Cl.: B29C 45/14, B29C 45/16

(54) **PROCÉDÉ DE FABRICATION D'UN ÉLÉMENT POUR PIÈCE DE CARROSSERIE**
VERFAHREN ZUR HERSTELLUNG EINES BAUTEILS FÜR EINE KAROSSERIE
PROCESS FOR MANUFACTURING AN ELEMENT OF A COACHWORK

(30) Priorité: 20.09.2019 FR 1910399
(43) Date de publication de la demande: 24.03.2021
(73) Titulaire: Compagnie Plastic Omnium SE, 69007 Lyon (FR)
(72) Inventeur: DUBOST, Elise, 01150 Sainte-Julie (FR); STABLO, Frédéric, 01150 Sainte-Julie (FR); JACQUEMET, Thierry, 01150 Sainte-Julie (FR)
(74) Mandataire: LLR

(56) Documents cités:
- WO-A1-2019/043202
- DE-A1-102008 006 553
- DE-A1-102012 109 820
- DE-C5-102008 006 553

## Description

L'invention concerne le domaine des véhicules automobiles, et plus particulièrement le domaine de la fabrication d'un élément en matière plastique, destiné à être monté sur une pièce de carrosserie.

De nombreux véhicules modernes sont équipés d'éléments de carrosserie en matière plastique pouvant équiper par exemple un hayon arrière, un flan de portière, des pare-chocs avant et arrière, un toit, etc. Le document DE 10 2008 006553 A1 divulgue un vitrage en matériau plastique, notamment pour véhicule automobile, ainsi qu'un procédé de fabrication d'un tel vitrage.

En particulier, depuis l'introduction des systèmes d'assistance à la conduite, on a besoin de placer sur certaines pièces de carrosserie en plastique des capteurs de différentes sortes, afin de mesurer des paramètres physiques extérieurs représentatifs de l'environnement extérieur du véhicule automobile. L'ensemble des valeurs de ces paramètres forme des informations disponibles en temps réel sur l'environnement du véhicule.

On utilise alors des éléments de carrosserie, rapportés sur la pièce de carrosserie, ayant, par exemple, une fonction de radôme, c'est-à-dire un élément transparent aux ondes électromagnétiques protégeant et cachant des capteurs. Par exemple, le document WO 2019 043202 A1 divulgue un procédé de fabrication d'un radôme.

A titre d'exemple, les pare-chocs sont désormais fréquemment équipés de radars de proximité qui permettent d'assister le conducteur lors des phases de manœuvre de stationnement du véhicule automobile à basse vitesse.

Certains capteurs, comme celui cité dans l'exemple ci-dessus, peuvent voir leur fonctionnement normal déréglé par la présence d'une couche de glace, de neige ou de givre en cas de température en dessous de 10 degrés Celsius. Cette couche de givre vient perturber le passage normal des ondes électromagnétiques, ce qui est une source d'erreur pour l'évaluation des paramètres physiques extérieurs.

Afin d'éviter le dépôt de givre, qui vient non seulement rendre le système d'assistance inutilisable, mais qui de surcroît peut générer de fausses alarmes, il est indispensable de prévoir un système de dégivrage sur l'élément pour pièce de carrosserie, par exemple sur la zone de la pièce de carrosserie qui sert de radôme.

Un tel système de dégivrage est traditionnellement formé d'une piste chauffante, constituée de fils conducteurs capables de transformer une énergie électrique en énergie thermique est associée à deux plaques de connexion disposées à chaque extrémité de la piste chauffante afin de l'alimenter en un courant électrique. Ce système est positionné sur un élément pour pièce de carrosserie situé à proximité d'un capteur. L'énergie thermique ainsi dégagée permet de dégivrer localement la pièce dans le cas où une couche de givre s'est formée.

Afin de rendre la fonction de dégivrage plus efficace, il est souhaitable de placer la piste chauffante près de la surface extérieure. Il est connu de l'état de la technique un tel radôme chauffant comprenant une piste chauffante reliée à un organe de connexion permettant d'alimenter la piste chauffante en électricité, l'organe de connexion étant agencé du même côté que la piste chauffante. L'organe de connexion est alors visible de l'extérieur du véhicule et il est nécessaire, au moment de l'assemblage du radôme, de prévoir une couronne disgracieuse autour de celui-ci pour cacher l'organe de connexion. Ceci implique la fabrication d'une pièce supplémentaire et rend le procédé de fabrication et d'assemblage plus long et plus coûteux. De plus, cette solution impose un agencement de l'organe de connexion à la périphérie du radôme ce qui présente des contraintes dans la position du système dégivrant. En effet, lorsque l'organe de connexion est agencé à la périphérie du radôme, il convient de rallonger la piste chauffante ce qui présente une perte d'efficacité de chauffage.

L'invention a notamment pour but de fournir un élément destiné à être monté sur une pièce de carrosserie, par exemple un radôme, qui est esthétique, efficace et plus facile à assembler.

A cet effet l'invention a pour objet un procédé de fabrication d'un élément pour pièce de carrosserie comprenant successivement les étapes suivantes :
- étape A : on réalise une feuille de support comprenant une première zone dans laquelle est agencé un organe de connexion et une seconde zone dans laquelle est agencée une piste chauffante qui est reliée à l'organe de connexion ;
- étape B : on modifie la forme de la feuille de support de façon à ce que la première zone et la seconde zone forment un angle qui est compris entre 65° et 115° ;
- étape C : on dispose la feuille de support dans une première chambre de moulage et on injecte une première matière thermoplastique dans la première chambre de moulage pour obtenir une première couche surmoulée sur la feuille de support, de préférence la première couche recouvrant la totalité de la seconde zone ;
- étape D : on dispose la feuille de support dans une seconde chambre de moulage et on injecte une seconde matière thermoplastique dans la seconde chambre de moulage pour obtenir une seconde couche surmoulée sur la première couche.

Le procédé tel que proposé permet d'agencer l'organe de connexion dans une zone autre que celle qui comprend la piste chauffante. Autrement dit, l'organe de connexion et la piste chauffante ne sont pas agencés dans le même plan ce qui permet de dissimuler l'organe de connexion sur un côté non visible de la pièce de carrosserie. L'élément pour pièce de carrosserie est ainsi plus esthétique.

De plus, ce procédé permet de rendre la position du système dégivrant dans la grille avant plus flexible puisqu'il n'y plus besoin de déporter la connexion et donc de rallonger les longueurs de fils.

L'élément peut être un radôme ou un lidôme destiné à être monté sur une pièce à l'avant du véhicule. La feuille de support peut être réalisée sous forme d'un film.

Suivant d'autres caractéristiques optionnelles du procédé prises seules ou en combinaison :
- La première couche recouvre la seconde zone et la seconde couche comprend une zone protubérante recouvrant partiellement la première zone. Ladite zone protubérante permet de protéger une portion de l'organe de connexion qui n'est pas accessible de l'extérieur. La zone protubérante permet également de maintenir l'angle formé entre la première zone et la seconde zone.
- La zone protubérante présente une forme longitudinale s'étendant depuis la seconde couche et comprend une cavité, l'organe de connexion étant au moins partiellement agencé dans ladite cavité. De ce fait, l'organe de connexion est partiellement accessible pour être raccordé à une source d'alimentation électrique de façon sécurisée.
- L'étape B est réalisée par un procédé de thermoformage de la feuille de support comprenant les étapes suivantes :
   - on chauffe la feuille de support à une température prédéterminée permettant de ramollir la feuille de support ;
   - on déforme la feuille de support en l'étirant jusqu'à ce que la première zone et la seconde zone forment l'angle souhaité. Ainsi, l'étape consistant à modifier la forme de la feuille de support est simplifiée.
- La piste chauffante comprend un matériau choisi parmi du cuivre, de l'argent, de l'or, du tungstène, un alliage d'argent et d'or ou un alliage de cuivre et de tungstène.
- La première matière thermoplastique est choisie parmi un polycarbonate, un polypropylène, un polyméthacrylate de méthyle, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène.
- La seconde matière thermoplastique est choisie parmi : polycarbonate (PC) opaque, polyuréthane (PU) injecté, mélange de polycarbonate (PC) transparent et polycarbonate (PC) opaque.
- La feuille de support est réalisée à partir d'une feuille de silicone, de polyoléfine (polyéthylène ou polypropylène), d'élastomère thermoplastique (TPE), de polyester, ou de polyamide.
- La première couche est surmoulée sur la feuille de support de telle sorte que la seconde zone est en contact uniquement avec la première couche. En d'autres termes, la seconde zone est entourée uniquement par la première couche, la première couche recouvrant la totalité de la seconde zone. Ainsi, l'effet de dégivrage obtenu par la piste chauffante est amélioré, du fait que la piste chauffante se situe dans l'épaisseur de la première couche, et est donc plus proche de la surface extérieure à dégivrer de l'élément pour pièce de carrosserie.

L'invention a également pour objet un élément pour pièce de carrosserie comprenant :
- une feuille de support comprenant une première zone dans laquelle est agencé un organe de connexion et une seconde zone dans laquelle est agencée une piste chauffante qui est reliée à l'organe de connexion, la première zone et la seconde zone formant un angle qui est compris entre 65° et 115° ;
- une première couche d'une première matière thermoplastique surmoulée sur la seconde zone, de préférence la première couche recouvrant la totalité de la seconde zone ;
- une seconde couche d'une seconde matière thermoplastique surmoulée sur la première couche, la seconde couche comprenant une zone protubérante recouvrant partiellement la première zone.

Avantageusement, la zone protubérante présente une forme longitudinale s'étendant depuis la seconde couche et comprend une cavité, l'organe de connexion étant au moins partiellement agencé dans ladite cavité.

### Brève description des figures

L'invention sera mieux comprise à la lecture de la description qui va suivre donnée uniquement à titre d'exemple et faite en se référant aux dessins annexés dans lesquels :
[Fig.1] la figure 1 est une vue en perspective d'un élément pour pièce de carrosserie selon un mode de réalisation de l'invention pendant une étape de fabrication ;
[Fig.2] la figure 2 est une vue en perspective de l'élément pour pièce de carrosserie de la figure 1 pendant une autre étape de fabrication ;
[Fig.3] la figure 3 est une vue de coupe de l'élément pour pièce de carrosserie de la figure 1 obtenu par le procédé de fabrication selon l'invention ;
[Fig.4] la figure 4 illustre le déroulement des étapes d'un procédé de fabrication d'un élément pour pièce de carrosserie selon un mode de réalisation de l'invention.

### Description détaillée

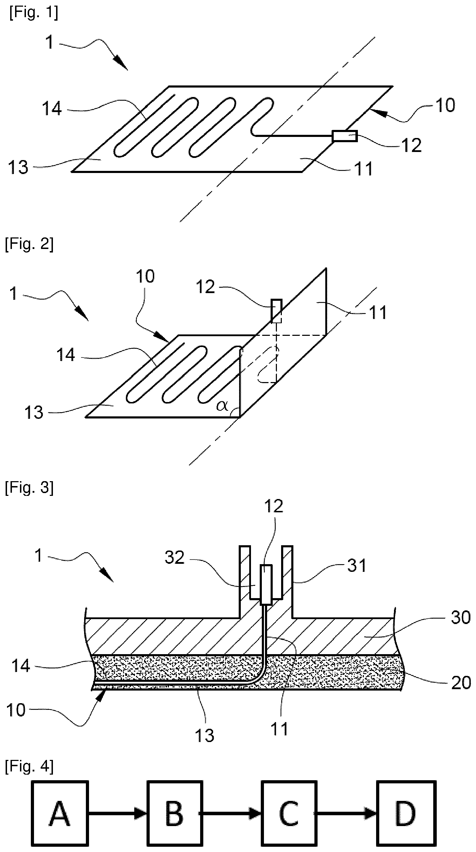

On a représenté sur les figures 1 à 3 un élément pour pièce de carrosserie selon un mode de réalisation de l'invention, désigné par la référence générale 1 qui est en cours de fabrication selon le procédé tel que proposé par la présente invention. L'élément 1 comprend une feuille de support 10 comprenant une première zone 11 et une seconde zone 13. La première zone 11 et la seconde zone 13 sont avoisinantes l'une par rapport à l'autre et occupent la totalité de la feuille de support 10. La feuille de support 10 peut être réalisée à partir d'une feuille de silicone, de polyoléfine (polyéthylène ou polypropylène), d'élastomère thermoplastique (TPE), de polyester, ou de polyamide.

Comme illustré sur la figure 4, le procédé de fabrication comprend une première étape A consistant à réaliser la feuille de support 10 de l'élément 1. L'élément 1 comprend en outre un organe de connexion 12 agencé dans la première zone 11 et une piste chauffante 14 agencée dans la seconde zone 13. La piste chauffante 14 est formée d'un fil conducteur de l'électricité et est reliée à l'organe de connexion 12. Comme visible à la figure 1, la piste chauffante 14 est disposée substantiellement sur la totalité de la seconde zone 13 de façon homogène et l'organe de connexion 12 est disposé au centre d'un bord de la première zone 11 qui est à l'opposé de la seconde zone 13.

Le procédé de fabrication comprend une deuxième étape B consistant à modifier la forme de la feuille de support 10 de façon à ce que la première zone 11 et la seconde zone 13 forment un angle (α) tel que visible sur la figure 2. Dans l'exemple illustré, l'angle (α) est égal à 90°. Cette étape peut être réalisée par un procédé de thermoformage de la feuille de support 10 comprenant les étapes suivantes :
- on chauffe la feuille de support 10 à une température prédéterminée permettant de ramollir la feuille de support 10 ;
- on déforme la feuille de support 10 en l'étirant jusqu'à ce que la première zone 11 et la seconde zone 13 forment l'angle souhaité.

Par la suite, lors d'une troisième étape C, on dispose la feuille de support 10 dans une première chambre de moulage et on injecte une première matière thermoplastique, par exemple transparente, dans la première chambre de moulage pour obtenir une première couche 20 surmoulée sur la feuille de support 20, tel qu'illustré sur la figure 3. Ainsi, la première couche 20 recouvre la totalité de la seconde zone 13 et une partie de la première zone 11 dont la largeur correspond à l'épaisseur de la première couche 20. La première couche 20 est surmoulée sur la feuille de support 3 de telle sorte que la seconde zone 13 comprenant la piste chauffante 14 est en contact uniquement avec la première couche 20. En d'autres termes, la seconde zone 13 est entourée uniquement par la première couche 20, la première couche 20 recouvrant la totalité de la seconde zone 13.

Lorsque la première couche 20 est formée, lors d'une quatrième étape D, on dispose la feuille de support 10 dans une seconde chambre de moulage et on injecte une seconde matière thermoplastique, par exemple opaque, dans la seconde chambre de moulage pour obtenir une seconde couche 30 surmoulée sur la première couche 20.

Cette seconde étape de surmoulage permet notamment d'obtenir une pièce plastique de plus grande dimension.

La première couche 20 est par exemple avantageusement transparente pour produire un effet esthétique de profondeur, sans toutefois rendre visible l'organe de connexion 12 disgracieux caché derrière la seconde couche 30 en matière plastique opaque. La première couche 20 matérialise en particulier la zone à dégivrer. Selon une variante, la première matière thermoplastique est opaque.

Comme visible sur la figure 3, la seconde couche 30 recouvre la première couche 20 au niveau de la seconde zone 13 de la feuille de support 10. La seconde couche 30 comprend en outre une zone protubérante 31 présentant une forme longitudinale qui s'étend depuis la seconde couche 30, ou en d'autres termes, qui s'étend en saillie par rapport au reste de la seconde couche 30. Cette zone protubérante 31 recouvre partiellement la première zone 11. La zone protubérante 31 comprend une cavité 32 dans laquelle est agencée la portion de l'organe de connexion 12 non moulée dans la seconde couche 30. Cette portion non moulée permet une connexion à une source d'alimentation électrique externe de manière sécurisée. En outre, cette zone protubérante 31 peut avantageusement constituer un support pour faciliter le raccordement de l'organe de connexion 12 à une source d'alimentation électrique externe.

L'invention n'est pas limitée aux modes de réalisation présentés et d'autres modes de réalisation apparaîtront clairement à l'homme du métier.

## Revendications

1. Procédé de fabrication d'un élément (1) pour pièce de carrosserie comprenant successivement les étapes suivantes :
- étape A : on réalise une feuille de support (10) comprenant une première zone (11) dans laquelle est agencé un organe de connexion (12) et une seconde zone (13) dans laquelle est agencée une piste chauffante (14) qui est reliée à l'organe de connexion (12) ;
- étape B : on modifie la forme de la feuille de support (10) de façon à ce que la première zone (11) et la seconde zone (13) forment un angle (a) qui est compris entre 65° et 115° ;
- étape C : on dispose la feuille de support (10) dans une première chambre de moulage et on injecte une première matière thermoplastique dans la première chambre de moulage pour obtenir une première couche (20) surmoulée sur la feuille de support (10), la première couche (20) recouvrant la totalité de la seconde zone (13) ;
- étape D : on dispose la feuille de support (10) dans une seconde chambre de moulage et on injecte une seconde matière thermoplastique dans la seconde chambre de moulage pour obtenir une seconde couche (30) surmoulée sur la première couche (20).

2. Procédé de fabrication selon la revendication précédente, dans lequel la seconde couche (30) comprend une zone protubérante (31) recouvrant partiellement la première zone (11).

3. Procédé de fabrication selon la revendication précédente, dans lequel la zone protubérante (31) présente une forme longitudinale s'étendant depuis la seconde couche (30) et comprend une cavité (32), l'organe de connexion étant au moins partiellement agencé dans ladite cavité (32).

4. Procédé de fabrication selon la revendication précédente, dans lequel l'étape B est réalisée par un procédé de thermoformage de la feuille de support (10) comprenant les étapes suivantes :
- on chauffe la feuille de support (10) à une température prédéterminée permettant de ramollir la feuille de support (10) ;
- on déforme la feuille de support (10) en l'étirant jusqu'à ce que la première zone (11) et la seconde zone (13) forment l'angle souhaité.

5. Procédé de fabrication selon l'une quelconque des revendications précédentes, dans lequel la piste chauffante (14) comprend un matériau choisi parmi du cuivre, de l'argent, de l'or, du tungstène, un alliage d'argent et d'or ou un alliage de cuivre et de tungstène.

6. Procédé de fabrication selon l'une quelconque des revendications précédentes, dans lequel la première matière thermoplastique est choisie parmi un polycarbonate, un polypropylène, un polyméthacrylate de méthyle, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène.

7. Procédé de fabrication selon l'une quelconque des revendications précédentes, dans lequel la seconde matière thermoplastique est choisie parmi : polycarbonate (PC) opaque, polyuréthane (PU) injecté, mélange de polycarbonate (PC) transparent et polycarbonate (PC) opaque.

8. Procédé de fabrication selon l'une quelconque des revendications précédentes, dans lequel la feuille de support (10) est réalisée à partir d'une feuille de silicone, de polyoléfine (polyéthylène ou polypropylène), d'élastomère thermoplastique (TPE), de polyester, ou de polyamide.

9. Élément (1) pour pièce de carrosserie, comprenant :
- une feuille de support (10) comprenant une première zone (11) dans laquelle est agencé un organe de connexion (12) et une seconde zone (13) dans laquelle est agencée une piste chauffante (14) qui est reliée à l'organe de connexion (12), la première zone (11) et la seconde zone (13) formant un angle (a) qui est compris entre 65° et 115° ;
- une première couche (20) d'une première matière thermoplastique surmoulée sur la seconde zone (13), la première couche (20) recouvrant la totalité de la seconde zone (13) ;
- une seconde couche (30) d'une seconde matière thermoplastique surmoulée sur la première couche (20), la seconde couche (30) comprenant une zone protubérante (31) recouvrant partiellement la première zone (11).

10. Élément (1) selon la revendication précédente, dans lequel la zone protubérante (31) présente une forme longitudinale s'étendant depuis la seconde couche (30) et comprend une cavité (32), l'organe de connexion étant au moins partiellement agencé dans ladite cavité (32).

## Patentansprüche

1. Verfahren zur Herstellung eines Elements (1) für ein Karosserieteil, das nacheinander die folgenden Schritte aufweist:
- Schritt A: Herstellen einer Trägerfolie (10) mit einem ersten Bereich (11), in dem ein Verbindungselement (12) angeordnet ist, und einem zweiten Bereich (13), in dem eine Heizspur (14) angeordnet ist, die mit dem Verbindungselement (12) verbunden ist;
- Schritt B: Verändern der Form der Trägerfolie (10) derart, dass der erste Bereich (11) und der zweite Bereich (13) einen Winkel (a) bilden, der zwischen 65° und 115° liegt;
- Schritt C: Anordnen der Trägerfolie (10) in einer ersten Formkammer und Einspritzen eines ersten thermoplastischen Materials in die erste Formkammer, um eine erste Schicht (20) zu erhalten, die auf die Trägerfolie (10) aufgeformt wird, wobei die erste Schicht (20) den gesamten zweiten Bereich (13) bedeckt;
- Schritt D: Anordnen der Trägerfolie (10) in einer zweiten Formkammer und Einspritzen eines zweiten thermoplastischen Materials in die zweite Formkammer, um eine zweite Schicht (30) zu erhalten, die auf die erste Schicht (20) aufgeformt wird.

2. Herstellungsverfahren nach dem vorhergehenden Anspruch, wobei die zweite Schicht (30) einen vorspringenden Bereich (31) aufweist, der den ersten Bereich (11) teilweise überdeckt.

3. Herstellungsverfahren nach dem vorhergehenden Anspruch, wobei der vorspringende Bereich (31) eine Längsform aufweist, die sich von der zweiten Schicht (30) aus erstreckt, und einen Hohlraum (32) aufweist, wobei das Verbindungselement zumindest teilweise in dem Hohlraum (32) angeordnet ist.

4. Herstellungsverfahren nach dem vorhergehenden Anspruch, wobei Schritt B durch ein Verfahren zum Thermoformen der Trägerfolie (10) durchgeführt wird, das die folgenden Schritte aufweist:
- Erwärmen der Trägerfolie (10) auf eine vorbestimmte Temperatur, die es ermöglicht, die Trägerfolie (10) zu erweichen;
- Verformen der Trägerfolie (10), indem sie gestreckt wird, bis der erste Bereich (11) und der zweite Bereich (13) den gewünschten Winkel bilden.

5. Herstellungsverfahren nach einem der vorhergehenden Ansprüche, wobei die Heizspur (14) ein Material aufweist, das aus Kupfer, Silber, Gold, Wolfram, einer Legierung aus Silber und Gold oder einer Legierung aus Kupfer und Wolfram ausgewählt ist.

6. Herstellungsverfahren nach einem der vorhergehenden Ansprüche, wobei der erste thermoplastische Kunststoff ausgewählt ist aus Polycarbonat, Polypropylen, Polymethylmethacrylat, Polyamid, Copolyester, Acrylnitril-Butadien-Styrol, Acrylnitril-Styrol-Acrylat, Acrylnitril-Styrol, einer Mischung aus Acrylnitril-Styrol-Acrylat und Polycarbonat, einer Mischung aus Polycarbonat und Polyethylenterephthalat.

7. Herstellungsverfahren nach einem der vorhergehenden Ansprüche, wobei der zweite thermoplastische Kunststoff ausgewählt ist aus: opakem Polycarbonat (PC), gespritztem Polyurethan (PU), einer Mischung aus transparentem Polycarbonat (PC) und opakem Polycarbonat (PC).

8. Herstellungsverfahren nach einem der vorhergehenden Ansprüche, wobei die Trägerfolie (10) aus einer Folie aus Silikon, Polyolefin (Polyethylen oder Polypropylen), thermoplastischem Elastomer (TPE), Polyester oder Polyamid hergestellt wird.

9. Element (1) für ein Karosserieteil, aufweisend:
- eine Trägerfolie (10) mit einem ersten Bereich (11), in dem ein Verbindungselement (12) angeordnet ist, und einem zweiten Bereich (13), in dem eine Heizspur (14) angeordnet ist, die mit dem Verbindungselement (12) verbunden ist, wobei der erste Bereich (11) und der zweite Bereich (13) einen Winkel (a) bilden, der zwischen 65° und 115° liegt;
- eine erste Schicht (20) aus einem ersten thermoplastischen Material, die auf den zweiten Bereich (13) aufgeformt ist, wobei die erste Schicht (20) den gesamten zweiten Bereich (13) bedeckt;
- eine zweite Schicht (30) aus einem zweiten thermoplastischen Material, die auf die erste Schicht (20) aufgeformt ist, wobei die zweite Schicht (30) einen vorspringenden Bereich (31) aufweist, der den ersten Bereich (11) teilweise bedeckt.

10. Element (1) nach dem vorhergehenden Anspruch, wobei der vorspringende Bereich (31) eine Längsform aufweist, die sich von der zweiten Schicht (30) aus erstreckt, und einen Hohlraum (32) aufweist, wobei das Verbindungselement zumindest teilweise in dem Hohlraum (32) angeordnet ist.

## Claims

1. A manufacturing method of an element (1) for a body part comprising successively the following steps:
- step A: producing a support sheet (10) comprising a first zone (11) in which is arranged a connecting member (12) and a second zone (13) in which is arranged a heating track (14) which is connected to the connecting member (12);
- step B: modifying the shape of the support sheet (10) so that the first zone (11) and the second zone (13) form an angle (a) which is between 65° and 115°;
- step C: placing the support sheet (10) in a first molding chamber and injecting a first thermoplastic material into the first molding chamber to obtain a first layer (20) overmolded on the support sheet (10), the first layer (20) covering the entire second zone (13);
- step D: placing the support sheet (10) in a second molding chamber and injecting a second thermoplastic material into the second molding chamber to obtain a second layer (30) overmolded on the first layer (20).

2. The manufacturing method according to the preceding claim, wherein the second layer (30) comprises a protruding zone (31) partially covering the first zone (11).

3. The manufacturing method according to the preceding claim, wherein the protruding zone (31) has a longitudinal shape extending from the second layer (30) and comprises a recess (32), the connecting member being at least partially arranged in said recess (32).

4. The manufacturing method according to the preceding claim, wherein step B is carried out by a thermoforming method of the support sheet (10) comprising the following steps:
- heating the support sheet (10) to a predetermined temperature to soften the support sheet (10);
- deforming the support sheet (10) by stretching it until the first zone (11) and the second zone (13) form the desired angle.

5. The manufacturing method according to any one of the preceding claims, wherein the heating track (14) comprises a material selected from copper, silver, gold, tungsten, an alloy of silver and gold or an alloy of copper and tungsten.

6. The manufacturing method according to any one of the preceding claims, wherein the first thermoplastic material is selected from polycarbonate, polypropylene, polymethyl methacrylate, polyamide, copolyester, acrylonitrile butadiene styrene, acrylonitrile styrene acrylate, styrene acrylonitrile, a mixture of acrylonitrile styrene acrylate and polycarbonate, a mixture of polycarbonate and polyethylene terephthalate.

7. The manufacturing method according to any one of the preceding claims, wherein the second thermoplastic material is selected from: opaque polycarbonate (PC), injected polyurethane (PU), a mixture of transparent polycarbonate (PC) and opaque polycarbonate (PC).

8. The manufacturing method according to any one of the preceding claims, wherein the support sheet (10) is made from a sheet of silicone, polyolefin (polyethylene or polypropylene), thermoplastic elastomer (TPE), polyester, or polyamide.

9. An element (1) for a body part, including:
- a support sheet (10) comprising a first zone (11) in which is arranged a connecting member (12) and a second zone (13) in which is arranged a heating track (14) which is connected to the connecting member (12), the first zone (11) and the second zone (13) forming an angle (a) which is between 65° and 115°;
- a first layer (20) of a first thermoplastic material overmolded on the second zone (13), the first layer (20) covering the entire second zone (13);
- a second layer (30) of a second thermoplastic material overmolded on the first layer (20), the second layer (30) comprising a protruding zone (31) partially covering the first zone (11).

10. The element (1) according to the preceding claim, wherein the protruding zone (31) has a longitudinal shape extending from the second layer (30) and comprises a recess (32), the connecting member being at least partially arranged in said recess (32).
